# EUROPÄISCHE PATENTSCHRIFT

(11) **EP 2 539 039 B1**
(45) Veröffentlichungstag und Bekanntmachung des Hinweises auf die Patenterteilung: **14.12.2016**
(21) Anmeldenummer: 11703202.9
(22) Anmeldetag: 07.02.2011
(51) Int. Cl.: B01D 46/00

(54) **FILTEREINRICHTUNG**
FILTER DEVICE
DISPOSITIF DE FILTRATION

(30) Priorität: 25.02.2010 DE 102010009249
(43) Veröffentlichungstag der Anmeldung: 02.01.2013
(73) Patentinhaber: Mahle International GmbH, 70376 Stuttgart (DE)
(72) Erfinder: TRAUB, Matthias, 71034 Böblingen (DE)
(74) Vertreter: BRP Renaud & Partner mbB Rechtsanwälte Patentanwälte Steuerberater
(86) Internationale Anmeldenummer: PCT/EP2011/051721
(87) Internationale Veröffentlichungsnummer: WO 2011/104107

(56) Entgegenhaltungen:
- EP-A1- 1 188 469
- WO-A1-2009/025927
- US-A- 4 333 580
- US-A- 6 039 778

## Beschreibung

Die vorliegende Erfindung betrifft eine Filtereinrichtung, insbesondere ein Luftfilter für eine Frischluftanlage eines Kraftfahrzeuges bzw. einer Brennkraftmaschine.

Aus der DE 600 04 456 T2 ist eine derartige Filtereinrichtung bekannt. Sie umfasst ein Filtergehäuse, das einen Aufnahmeraum enthält, sowie ein ringförmiges Filterelement, das axial in den Aufnahmeraum eingesetzt ist. Ferner ist ein Deckel zum Verschließen des Aufnahmeraums vorhanden. Bei der bekannten Filtereinrichtung ist der Deckel mittels eines Gewindeverschlusses am Filtergehäuse lösbar befestigt. Hierzu weist der Deckel ein Außengewinde auf, das in ein am Filtergehäuse ausgebildetes Innengewinde einschraubbar ist. Zum Befestigen und zum Lösen des Deckels muss dieser dementsprechend verdreht werden. Bei der bekannten Filtereinrichtung ist außerdem eine nach Art einer Verrastung arbeitende Sicherungseinrichtung vorgesehen, die den eingeschraubten Deckel gegen ein Verdrehen in der Öffnungsrichtung sichert.

Problematisch bei einer derartigen Ausgestaltung ist der Umstand, dass relativ enge Fertigungstoleranzen eingehalten werden müssen, damit die Drehbewegung des Deckels beim Erreichen der Schließstellung genau dort endet, wo die Sicherungseinrichtung einrasten und die gewünschte Verdrehsicherung bewirken kann. Bei mehrfachem Öffnen und Schließen des Deckels kann es aufgrund von Abnutzungserscheinungen und/oder aufgrund von Verschmutzungen zu einer veränderten Drehlage des Deckels in seiner Schließstellung kommen, sodass die Verdrehsicherung mit Hilfe der Sicherungseinrichtung erschwert ist.

Weiterhin ist aus der EP 1 188 469 A1 eine Filtervorrichtung bekannt, die eine Sicherungseinrichtung nach dem Oberbegriff des Anspruchs 1 aufweist.

Die vorliegende Erfindung beschäftigt sich mit dem Problem, für eine Filtereinrichtung der eingangs genannten Art eine verbesserte oder zumindest eine andere Ausführungsform anzugeben, die sich insbesondere durch eine hohe Funktionssicherheit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Deckel mittels eines Bajonettverschlusses am Filtergehäuse lösbar zu befestigen. Ein derartiger Bajonettverschluss zeichnet sich durch eine einfache Handhabung sowie durch eine hohe Zuverlässigkeit aus. Darüber hinaus lassen sich mit Hilfe eines Bajonettverschlusses eine Entriegelungsstellung und eine Verriegelungsstellung mit definierten Relativlagen zwischen Deckel und Filtergehäuse vorgeben, die von Verschleiß und von Verunreinigungen weitgehend unabhängig sind.

Von besonderem Vorteil ist daher eine Erfindung, bei welcher eine Sicherungseinrichtung den in die Verriegelungsstellung verdrehten Deckel gegen ein Zurückdrehen in die Entriegelungsstellung sichert. Da der Bajonettverschluss eine definierte Relativlage zwischen Deckel und Filtergehäuse in der Verriegelungsstellung ermöglicht, ergibt sich für die in der Verriegelungsstellung wirksame Sicherungseinrichtung eine besonders hohe Zuverlässigkeit.

Entsprechend der Erfindung weist die Sicherungseinrichtung einen in Radialrichtung federelastischen Rasthaken auf, der beim Verdrehen des Deckels von der Entriegelungsstellung in die Verriegelungsstellung sich relativ zu einem Hindernis in Umfangsrichtung verstellt, das Hindernis zum Erreichen der Verriegelungsstellung überfährt und das Hindernis beim Erreichen der Verriegelungsstellung formschlüssig hintergreift. Durch diesen Vorschlag wird eine besonders effektive Verdrehsicherung realisiert, die beim Eindrehen in die Verriegelungsstellung automatisch aktiviert wird und ein Zurückdrehen aus der Verriegelungsstellung heraus effektiv behindert.

Von besonderem Vorteil ist eine Ausführungsform, bei welcher eine Drehbegrenzung das Verdrehen des Deckels in der Verriegelungsrichtung auf die Verriegelungsstellung und/oder in der Entriegelungsrichtung auf die Entriegelungsstellung begrenzt. Durch das Versehen des Deckels bzw. des Filtergehäuses mit einer zusätzlich zum Bajonettverschluss vorgesehenen Drehbegrenzung, lässt sich der Bajonettverschluss konstruktiv besonders einfach realisieren, nämlich ohne integrierte Drehbegrenzung. Hierdurch wird eine funktionale Trennung zwischen der Verschlussfunktion und der Drehbegrenzungsfunktion erreicht, derart, dass der Bajonettverschluss nur die Verschlussfunktion erfüllt, während die Drehbegrenzung nur die Drehbegrenzungsfunktion erfüllt. Hierdurch kann insbesondere die automatisierte Herstellung des Bajonettverschlusses vereinfacht werden.

Gemäß einer weiteren Ausgestaltung kann nun vorgesehen sein, die vorgenannte Drehbegrenzung in die vorgenannte Sicherungseinrichtung zu integrieren. Hierdurch erhält die Sicherungseinrichtung eine zusätzliche Funktionalität. Gleichzeitig bewirkt die Integration der Drehbegrenzung und der Sicherungseinrichtung eine vereinfachte Herstellbarkeit der Filtereinrichtung.

Zweckmäßig kann vorgesehen sein, das Hindernis der Sicherungseinrichtung zum Ausbilden der Drehbegrenzung radial in eine in Umfangsrichtung begrenzte Aussparung eingreifen zu lassen, die sich beim Verdrehen des Deckels relativ zum Hindernis in Umfangsrichtung verstellt.

Von besonderer Bedeutung ist eine Ausführungsform, bei welcher eine Notfixiereinrichtung vorgesehen ist, die bei ausgefallener oder defekter oder fehlender Sicherungseinrichtung aktivierbar ist, um den Deckel in der Verriegelungsstellung zu sichern. Hierdurch wird für die Verdrehsicherung des Deckels in der Verriegelungsstellung eine redundante Fixierung bereitgestellt, die dann aktivierbar ist, wenn die (Haupt-)Sicherungseinrichtung deaktiviert ist.

Bspw. kann die Notfixiereinrichtung eine am Gehäuse ausgebildete Konsole und eine am Deckel ausgebildete, davon radial abstehende Lasche aufweisen, die in der Verriegelungsstellung zur Konsole axial fluchtet. Die Notfixiereinrichtung ist dadurch aktivierbar, dass ein Sicherungselement, z. B. ein Stift oder eine Schraube, die Lasche axial durchsetzt und axial in die Konsole eindringt. Hierzu kann die Lasche mit einer entsprechenden Durchgangsöffnung versehen sein. Dabei ist es möglich, eine derartige Durchgangsöffnung erst im Rahmen der Aktivierung der Notfixiereinrichtung in der Lasche einzubringen.

Entsprechend einer besonderen Ausführungsform kann der Deckel einen Stutzen aufweisen, der durch eine in einer axialen Endscheibe des Filterelements ausgebildete, zentrale Scheibenöffnung in das Innere des Filterelements hineinragt. An dem Deckel bzw. an dessen Stutzen ist eine Fluidleitung anschließbar, die auf diese Weise mit dem Inneren des Filterelements fluidisch verbunden ist bzw. damit kommuniziert. Hierdurch kann der Deckel mit einer Zusatzfunktion versehen werden, da er einen Anschluss des Filtergehäuses besitzt, z. B. einen Einlass oder einen Auslass für das mit Hilfe des Filterelements zu reinigenden Fluid, z.B. ein Gas oder eine Flüssigkeit.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen vereinfachten Längsschnitt durch eine Filtereinrichtung,
- Fig. 2: eine vergrößerte Schnittansicht der Filtereinrichtung im Bereich eines Deckels,
- Fig. 3: eine isometrische Ansicht der Filtereinrichtung im Bereich des Deckels,
- Fig. 4: eine isometrische Ansicht wie in Fig. 3, jedoch in einer anderen Blickrichtung im Bereich einer Sicherungseinrichtung.

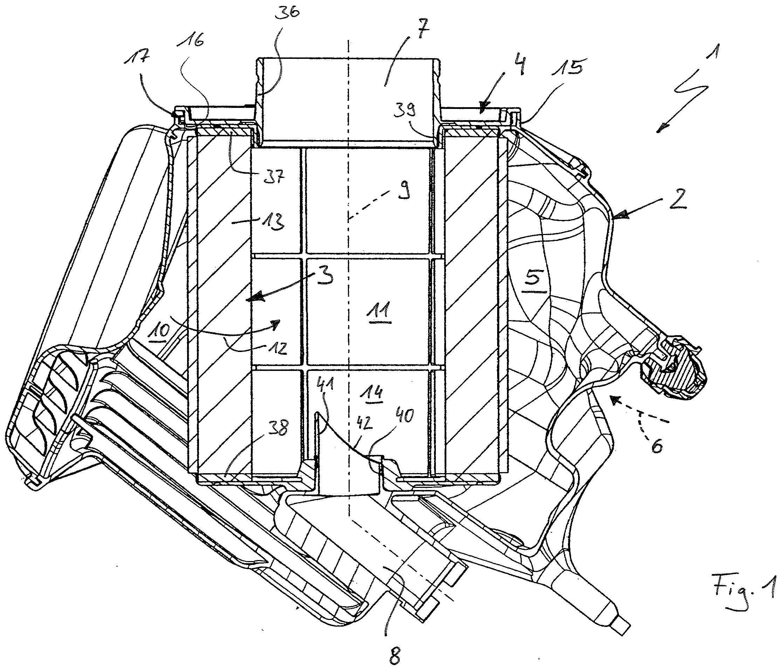

Entsprechend den Figuren 1 bis 4 umfasst eine Filtereinrichtung 1 ein Filtergehäuse 2, ein Filterelement 3 und einen Deckel 4. Die Filtereinrichtung 1 dient zum Filtern eines Fluids. Bevorzugt ist sie zum Filtern eines Gases vorgesehen. Insbesondere handelt es sich um ein Luftfilter bzw. um eine Luftfiltereinrichtung für eine Frischluftanlage zur Versorgung eines Fahrzeuginnenraums und/oder zur Versorgung einer Brennkraftmaschine mit Frischluft.

Das Filtergehäuse 2 enthält einen Aufnahmeraum 5, in den das Filterelement 3 eingesetzt ist. Das Gehäuse 2 besitzt einen hier durch das Filterelement 3 verdeckten Einlass 6, der in Fig. 1 durch einen mit unterbrochener Linie dargestellten Pfeil angedeutet ist. Ferner weist das Gehäuse 2 zumindest einen Auslass auf. Im Beispiel sind zwei Auslässe 7 und 8, nämlich ein Primärauslass 7 und ein Sekundärauslass 8 vorgesehen. Bei der hier gezeigten, besonders vorteilhaften Ausführungsform ist der Primärauslass 7 integral am Deckel 4 ausgeformt, während der Sekundärauslass 8 integral am eigentlichen Filtergehäuse 2 ausgeformt ist. Der Primärauslass 7 führt z.B. zur Brennkraftmaschine, während der Sekundärauslass 8 z.B. zu einer Abgasanlage der Brennkraftmaschine führt, beispielsweise um einen Katalysator oder ein Partikelfilter mit Luft zu versorgen.

Das Filterelement 3 ist ringförmig ausgestaltet, wodurch es eine Längsmittelachse 9 besitzt, welche die Axialrichtung des Filterelements 3 und somit auch des Gehäuses 2 definiert. Das Filterelement 3 ist axial in den Aufnahmeraum 5 eingesetzt und trennt im Aufnahmeraum 5 eine Rohseite 10 von einer Reinseite 11. Im Beispiel ist das Filterelement 3 entsprechend einem Pfeil 12 radial von außen nach innen durchströmt. Dementsprechend umhüllt die Rohseite 10 das Filterelement 3, während ein ringförmiger Filterkörper 13 des Filterelements 3 die Reinseite 11 umschließt. Die Reinseite 11 ist dadurch in einem Inneren 14 des Filterelements 3 ausgebildet, das vom Filterkörper 13 ringförmig umschlossen ist. Der Filterkörper 13 besteht aus einem geeigneten Filtermaterial. Insbesondere kann er gefaltet bzw. plissiert sein.

Der Deckel 4 verschließt den Aufnahmeraum 5, wozu er an einer Deckelaufnahme 15 angeordnet ist, die am Filtergehäuse 2 ausgebildet ist. Die Deckelaufnahme 15 umschließt bzw. berandet eine Gehäuseöffnung 16, durch welche das Filterelement 3 in den Aufnahmeraum 5 einführbar bzw. daraus entnehmbar ist, wenn der Deckel 4 vom Gehäuse 2 entfernt ist.

Der Deckel 4 ist mit Hilfe eines Bajonettverschlusses 17 am Filtergehäuse 2 lösbar befestigt. Entsprechend der üblichen Funktionsweise eines derartigen Bajonettverschlusses 17 ist der Deckel 4 axial in die Deckelaufnahme 15 einsetzbar und im eingesetzten Zustand zwischen einer Entriegelungsstellung und einer Verriegelungsstellung verdrehbar. Die Verdrehung des Deckels 4 erfolgt bei der hier gezeigten, rotationssymmetrischen Bauweise um die Längsmittelachse 9 des Filterelements 3. Zum axialen Einsetzen des Deckels 4 in die Deckelaufnahme 15 ist der Deckel 4 dabei bereits hinsichtlich seiner Drehlage auf die Entriegelungsstellung ausgerichtet.

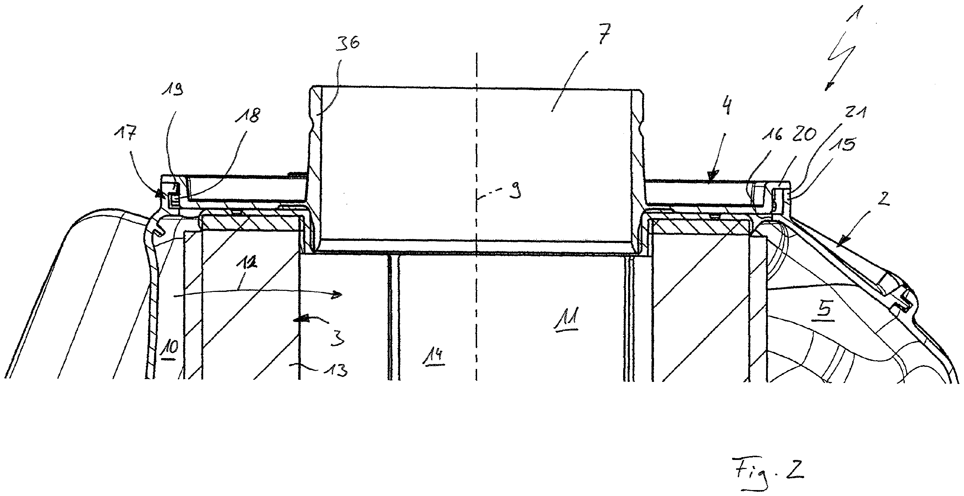

Der Bajonettverschluss 17 weist entsprechend Fig. 2 mehrere Vorsprünge 18 auf, die am Deckel 4 radial abstehen und in Umfangsrichtung verteilt angeordnet sind. Die Umfangsrichtung bezieht sich dabei auf die durch die Längsmittelachse 9 definierte Axialrichtung. Komplementär dazu weist der Bajonettverschluss 17 mehrere Haltesegmente 19 auf, die an der Deckelaufnahme 15 radial abstehen. In der Schnittdarstellung der Fig. 2 ist jeweils nur ein Vorsprung 18 und ein Haltesegment 19 erkennbar. Zweckmäßig besitzt der Bajonettverschluss 17 drei oder mehr derartige Paare von Vorsprüngen 18 und Haltesegmenten 19.

Beim Einsetzen des Deckels 4 in die Deckelaufnahme 15 werden die Vorsprünge 18 an den zugehörigen Haltesegmenten 19 axial vorbeibewegt. Beim anschließenden Verdrehen des Deckels 4 von der Entriegelungsstellung in die Verriegelungsstellung bewegen sich die Vorsprünge 18 unter die Haltesegmente 19, derart, dass der jeweilige Vorsprung 18 das zugehörige Haltesegment 19 axial hintergreift. Es ist klar, dass hierzu an der Deckelaufnahme 15 entsprechende Umfangssegmente vorhanden sind, die in Umfangsrichtung zwischen benachbarten Haltesegmenten 19 angeordnet sind und die es den Vorsprüngen 18 ermöglichen, axial an den Haltesegmenten 19 vorbeibewegt zu werden.

Beim hier gezeigten Beispiel sitzt der Deckel 4 auf einem Deckelrand 20, der radial nach außen absteht und bei in die Deckelaufnahme 15 eingesetztem Deckel 4 auf einem Kragen 21 stirnseitig, also axial aufliegt. Der Kragen 21 steht vom Filtergehäuse 2 axial ab und bildet eine Einfassung oder Berandung der Deckelaufnahme 15. Die zuvor genannten Vorsprünge 18 des Bajonettverschlusses 17 sind axial beabstandet zum Deckelrand 20 am Deckel 4 ausgebildet. Des Weiteren sind im Beispiel die Haltesegmente 19 des Bajonettverschlusses 17 am stirnseitigen Ende des Kragens 21 ausgebildet.

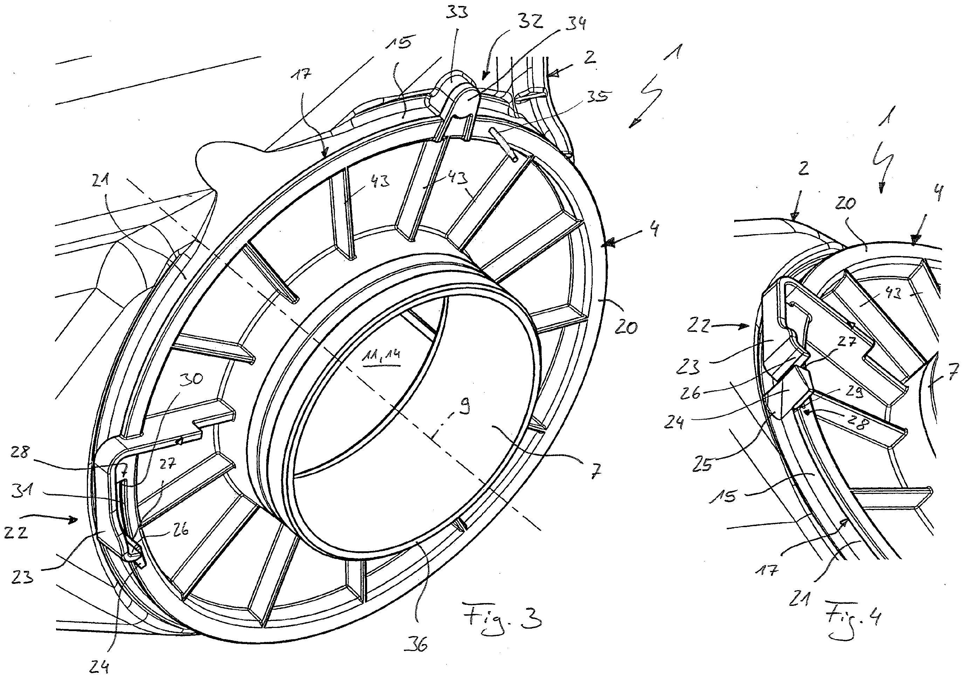

Entsprechend den Figuren 3 und 4 ist die Filtereinrichtung 1 gemäß der Erfindung mit einer Sicherungseinrichtung 22 ausgestattet. Mit Hilfe dieser Sicherungseinrichtung 22 ist der Deckel 4 gegen ein Zurückdrehen in die Entriegelungsstellung gesichert, wenn er in die Verriegelungsstellung verdreht ist.

Die Sicherungseinrichtung 22 gemäß der Erfindung besitzt einen Rasthaken 23, der in der Radialrichtung federelastisch ist. Die Radialrichtung bezieht sich dabei auf die durch die Längsmittelachse 9 definierte Axialrichtung. Beim Verdrehen des Deckels 4 von der Entriegelungsstellung in die Verriegelungsstellung verstellt sich der Rasthaken 23 relativ zu einem Hindernis 24, das ebenfalls einen Bestandteil der Sicherungseinrichtung 22 repräsentiert. Zum Erreichen der Verriegelungsstellung überfährt der Rasthaken 23 das Hindernis 24 in der Umfangsrichtung. Beim Erreichen der Verriegelungsstellung hintergreift der Rasthaken 23 das Hindernis 24 in der Umfangsrichtung formschlüssig. Im gezeigten, bevorzugten Beispiel ist der Rasthaken 23 am Deckel 4 angeordnet, während das Hindernis 24 am Filtergehäuse 2 bzw. an der Deckelaufnahme 15 angeordnet ist. Grundsätzlich ist auch eine umgekehrte Anordnung möglich. Bevorzugt ist dabei die hier gezeigte Variante, bei welcher der Rasthaken 23 am Deckel 4 integral ausgeformt ist. Auch ist es zweckmäßig, das Hindernis 24 am Filtergehäuse 2 integral auszuformen.

Um die radiale Auslenkung des Rasthakens 23 beim Überfahren des Hindernisses 24 zu erleichtern, weist das Hindernis 24 gemäß Fig. 4 eine Rampenflanke 25 auf. Beim Verdrehen des Deckels 4 von der Entriegelungsstellung in die Verriegelungsstellung trifft der Rasthaken 23 mit seinem radial nach innen weisenden Endabschnitt 26 auf die Rampenflanke 25. Bei weitergehender Verdrehung des Deckels 4 wird der Endabschnitt 26 dann entlang der Rampenflanke 25 radial nach außen verdrängt. Hierbei kann der Rasthaken 23 federelastisch nachgeben. Sobald der Endabschnitt 26 die Rampenflanke 25 bzw. das Hindernis 24 in der Umfangsrichtung vollständig überfahren hat, bewirkt die Federelastizität des Rasthakens 23 ein Zurückfedern des Rasthakens 23 und des Endabschnitts 26 radial nach innen, wodurch der Rasthaken 23 mit seinem Endabschnitt 26 das Hindernis 24 in der Umfangsrichtung hintergreift. Soll nun der Deckel 24 in Richtung Entriegelungsstellung zurückgedreht werden, trifft der Endabschnitt 26 auf eine Widerlagerflanke 27 des Hindernisses 24. Diese Widerlagerflanke 27 ist radial orientiert und bewirkt somit keine radiale Verdrängung des Rasthakens 23.

Entsprechend der hier gezeigten, bevorzugten Ausführungsform ist die Filtereinrichtung 1 außerdem mit einer Drehbegrenzung 28 ausgestattet. Diese Drehbegrenzung 28 begrenzt das Verdrehen des Deckels 4 in der Verriegelungsrichtung auf die Verriegelungsstellung bzw. in der Entriegelungsrichtung auf die Entriegelungsstellung. Im Beispiel umfasst die Drehbegrenzung 28 eine in Fig. 4 erkennbare Verriegelungsflanke 29 und eine in Fig. 3 erkennbare Entriegelungsflanke 30. Diese beiden Flanken 29, 30 sind im Beispiel durch die in Umfangsrichtung liegenden Enden einer in den Deckel 4 randseitig eingearbeiteten Aussparung 31 gebildet. Die beiden Flanken 29, 30 wirken dabei mit dem Hindernis 24 zusammen, das hierzu am Filtergehäuse 2 so positioniert ist, dass es in besagte Aussparung 31 radial eingreift. In der Entriegelungsstellung kommt das Hindernis 24 an der Entriegelungsflanke 30 zur Anlage. In der Verriegelungsstellung kommt das Hindernis 24 an der Verriegelungsflanke 29 zur Anlage. Die hier vorgestellte Drehbegrenzung 28 begrenzt das Verdrehen des Deckels 4 somit sowohl in der Verriegelungsrichtung auf die Verriegelungsstellung als auch in der Entriegelungsrichtung auf die Entriegelungsstellung.

Zweckmäßig ist bei der hier gezeigten Ausführungsform die Drehbegrenzung 28 in die Sicherungseinrichtung 22 integriert. Dies kann z.B. dadurch erfolgen, dass das Hindernis 24 zum einen mit den Rasthaken 23 zusammenwirkt und zum anderen mit den Flanken 29,30 der Drehbegrenzung 28 zusammenwirkt. Mit anderen Worten, das Hindernis 24 der Sicherungseinrichtung 22 greift zum Ausbilden der Drehbegrenzung 28 radial in die Aussparung 31 ein, die in der Umfangsrichtung einerseits durch die Entriegelungsflanke 30 und andererseits durch die Verriegelungsflanke 29 begrenzt ist. Beim Verdrehen des Deckels 4 verstellt sich die Aussparung 31 relativ zum Hindernis 24, das bzgl. des Gehäuses 2 ortsfest ist.

Die hier gezeigte Filtereinrichtung 1 ist gemäß Fig. 3 außerdem mit einer Notfixiereinrichtung 32 ausgestattet. Bei ausgefallener oder defekter oder fehlender Sicherungseinrichtung 22 kann diese Notfixiereinrichtung 32 aktiviert werden, um den Deckel 4 in der Verriegelungsstellung zu sichern. Die Sicherungseinrichtung 22 kann bspw. dadurch deaktiviert werden, dass der Rasthaken 23 und/oder das Hindernis 24 beschädigt oder abgebrochen ist bzw. sind.

Die Notfixiereinrichtung 32 weist hier eine am Gehäuse 2 ausgebildete Konsole 33 und eine am Deckel 4 ausgebildete Lasche 34 auf. Die Lasche 34 steht radial vom Deckel 4 ab und fluchtet in der Verriegelungsstellung axial zur Konsole 33. Diese Notfixiereinrichtung 32 kann bspw. dadurch aktiviert werden, dass ein hier nur rudimentär angedeutetes Sicherungselement 35 die Lasche 34 axial durchsetzt und in die Konsole 33 axial eindringt. Das Sicherungselement 35 kann ein Stift sein. Ebenso kann es sich beim Sicherungselement 35 um eine Schraube handeln. Eine entsprechende Öffnung zum Einbringen des Sicherungselementes 35 in die Lasche 34 bzw. in die Konsole 33 kann bedarfsabhängig zum Aktivieren der Notfixiereinrichtung 32 eingebracht werden. Ebenso ist es grundsätzlich möglich, besagte Öffnung bereits von vornherein zumindest an der Lasche 34 vorzusehen.

Entsprechend den Figuren 1 bis 3 besitzt der Deckel 4 zweckmäßig einen Stutzen 36, der den Primärauslass 7 umschließt. An diesen Stutzen 36 ist eine entsprechende Fluidleitung anschließbar. Das Filterelement 3 besitzt an seinen axialen Enden jeweils eine Endscheibe 37 bzw. 38. Die jeweilige Endscheibe 37,38 ist mit dem Filterkörper 13 dicht verbunden. Die dem Deckel 4 zugewandte Endscheibe 37 enthält eine zentrale Scheibenöffnung 39, durch die der Stutzen 36 in das Innere 14 des Filterelements 3 hineinragt. Dabei ist der Stutzen 36 zweckmäßig so in die Endscheibe 37 eingesteckt, dass sich dabei gleichzeitig eine ausreichende Abdichtung einstellt.

Ferner kann vorgesehen sein, das Filterelement 3 am Deckel 4 lösbar so zu fixieren, dass das Filterelement 3 beim Entfernen des Deckels 4 aus dem Aufnahmeraum 5 herausgezogen wird. Diese Fixierung des Filterelements 3 am Deckel 4 kann bspw. dadurch realisiert werden, dass der Stutzen 36 beim Einstecken in die Scheibenöffnung 39 eine kraftschlüssige Verbindung zwischen Deckel 4 und Filterelement 3 herstellt. Zusätzlich oder alternativ kann eine Clipsverbindung vorgesehen sein, die den Deckel 4 mit dem Filterelement 3 verbindet.

Im gezeigten Beispiel besitzt auch die dem Sekundärauslass 8 zugewandte Endscheibe 38 eine zentrale Scheibenöffnung 40, die jedoch einen kleineren Querschnitt besitzt als die dem Primärauslass 7 zugeordnete Scheibenöffnung 39. Am Gehäuse 2 ist im Aufnahmeraum 5 ein Stutzen 41 ausgebildet, der abgedichtet in die Scheibenöffnung 40 der zugehörigen Endscheibe 38 eindringt, sobald das Filterelement 3 ordnungsgemäß in den Aufnahmeraum 5 eingesetzt ist. Besagter Stutzen 41 ist mit einer abgeschrägten Stirnseite 42 versehen, um das Einfädeln bzw. das Auffinden der zentralen Scheibenöffnung 40 zu vereinfachen.

Gemäß den Figuren 3 und 4 ist der Deckel 4 an seiner vom Aufnahmeraum 5 abgewandten Außenseite verrippt. Die einzelnen Rippen sind dabei mit 43 bezeichnet. Die Rippen 43 erstrecken sich vom Stutzen 36 sternförmig, also radial. Hierdurch erhält der Deckel 4 eine erhöhte Stabilität.

## Patentansprüche

1. Filtereinrichtung, insbesondere Luftfilter für eine Frischluftanlage eines Kraftfahrzeugs und/oder einer Brennkraftmaschine,
- mit einem Filtergehäuse (2), das einen Aufnahmeraum (5) enthält,
- mit einem ringförmigen Filterelement (3), das in den Aufnahmeraum (5) eingesetzt ist,
- mit einem Deckel (4) zum Verschließen des Aufnahmeraums (5),
- wobei der Deckel (4) mittels eines Bajonettverschlusses (17) am Filtergehäuse (2) lösbar befestigt ist, sodass der Deckel (4) in eine am Filtergehäuse (2) ausgebildete Deckelaufnahme (15) axial einsetzbar und im eingesetzten Zustand zwischen einer Entriegelungsstellung und einer Verriegelungsstellung verdrehbar ist,
- wobei eine Sicherungseinrichtung (22) den in die Verriegelungsstellung verdrehten Deckel (4) gegen ein Zurückdrehen in die Entriegelungsstellung sichert,
- wobei die Sicherungseinrichtung (22) einen in Radialrichtung federelastischen Rasthaken (23) aufweist, der beim Verdrehen des Deckels (4) von der Entriegelungsstellung in die Verriegelungsstellung sich relativ zu einem Hindernis (24) in Umfangsrichtung verstellt, das Hindernis (24) zum Erreichen der Verriegelungsstellung überfährt und das Hindernis (24) beim Erreichen der Verriegelungsstellung formschlüssig hintergreift,
**dadurch gekennzeichnet,**
- **dass** das Hindernis (24) eine Rampenflanke (25) aufweist, die den Rasthaken (23) beim Überfahren radial verdrängt.

2. Filtereinrichtung nach Anspruch 1,
**dadurch gekennzeichnet,**
**dass** eine Drehbegrenzung (28) das Verdrehen des Deckels (4) in der Verriegelungsrichtung auf die Verriegelungsstellung und/oder in der Entriegelungsrichtung auf die Entriegelungsstellung begrenzt.

3. Filtereinrichtung nach Anspruch 2,
**dadurch gekennzeichnet,**
**dass** die Drehbegrenzung (28) in die Sicherungseinrichtung (22) integriert ist.

4. Filtereinrichtung nach Anspruch 3,
**dadurch gekennzeichnet,**
**dass** das Hindernis (24) der Sicherungseinrichtung (22) zum Ausbilden der Drehbegrenzung (28) radial in eine in Umfangsrichtung begrenzte Aussparung (31) eingreift, die sich beim Verdrehen des Deckels (4) relativ zum Hindernis (24) in Umfangsrichtung verstellt.

5. Filtereinrichtung nach einem der Ansprüche 1 bis 4,
**dadurch gekennzeichnet,**
**dass** der Rasthaken (23) am Deckel (4) angeordnet ist, wobei insbesondere vorgesehen sein kann, dass der Rasthaken (23) am Deckel (4) integral ausgeformt ist.

6. Filtereinrichtung nach einem der Ansprüche 1 bis 5,
**dadurch gekennzeichnet,**
**dass** eine Notfixiereinrichtung (32) vorgesehen ist, die bei ausgefallener oder defekter oder fehlender Sicherungseinrichtung (22) aktivierbar ist, um den Deckel (4) in der Verriegelungsstellung zu sichern.

7. Filtereinrichtung nach Anspruch 6,
**dadurch gekennzeichnet,**
**dass** die Notfixiereinrichtung (32) eine am Gehäuse (2) ausgebildete Konsole (33) und eine am Deckel (4) ausgebildete, davon radial abstehende Lasche (34) aufweist, die in der Verriegelungsstellung zur Konsole (33) axial fluchtet, wobei die Notfixiereinrichtung (32) dadurch aktivierbar ist, dass ein Sicherungselement (35) die Lasche (34) axial durchsetzt und axial in die Konsole (33) eindringt.

8. Filtereinrichtung nach einem der Ansprüche 1 bis 7,
**dadurch gekennzeichnet,**
**dass** der Deckel (4) einen Stutzen (36) aufweist, der durch eine in einer axialen Endscheibe (37) des Filterelements (3) ausgebildete, zentrale Scheibenöffnung (39) in das Innere (14) des Filterelements (3) hineinragt.

9. Filtereinrichtung nach einem der Ansprüche 1 bis 8,
**dadurch gekennzeichnet,**
**dass** das Filterelement (3) am Deckel (4) fixiert ist, derart, dass beim Entfernen des Deckels (4) das Filterelement (3) aus dem Aufnahmeraum (5) herausgezogen wird.

10. Filtereinrichtung nach Anspruch 9,
**dadurch gekennzeichnet,**
**dass** der Deckel (4) durch das Einstecken des Stutzens (36) in die Endscheibe (37) am Filterelement (3) fixiert ist.

11. Filtereinrichtung nach einem der Ansprüche 1 bis 10,
**dadurch gekennzeichnet,**
**dass** der Bajonettverschluss (17) mehrere am Deckel (4) radial abstehende, in Umfangsrichtung verteilt angeordnete Vorsprünge (18) sowie komplementär dazu an der Deckelaufnahme (15) radial abstehende Haltesegmente (19) aufweist.

12. Filtereinrichtung nach Anspruch 11,
**dadurch gekennzeichnet,**
**dass** der Deckel (4) einen radial nach außen abstehenden Deckelrand (20) aufweist, der bei eingesetztem Deckel (4) auf einem axial vom Filtergehäuse (2) abstehenden Kragen (21) stirnseitig aufliegt.

13. Filtereinrichtung nach Anspruch 12,
**dadurch gekennzeichnet,**
**dass** die Vorsprünge (18) axial beabstandet zum Deckelrand (20) angeordnet sind.

14. Filterelement nach Anspruch 12 oder 13,
**dadurch gekennzeichnet,**
**dass** die Haltesegmente (19) am stirnseitigen Ende des Kragens (21) angeordnet sind.

## Claims

1. A filter device, particularly an air filter for a ventilation system of a motor vehicle and/or an internal combustion engine, having
- a filter housing (2), which contains an accommodation space (5),
- an annular filter element (3), which is inserted into the accommodation space (5),
- a lid (4) for closing the accommodation space (5),
- wherein the lid (4) is releasably fastened to the filter housing (2) with the aid of a bayonet closure (17), so that the lid (4) can be axially inserted into a lid receptacle (15) formed on the filter housing (2) and can be rotated in the inserted state between an unlocking position and a locking position,
- wherein a securing device (22) secures the lid (4), which is rotated into the locking position, against being rotated back into the unlocking position,
- wherein the securing device (22) has a latching hook (23) which is resilient in the radial direction and which, during the rotation of the lid (4) from the unlocking position into the locking position, moves in the circumferential direction relatively to an obstacle (24), runs over the obstacle (24) to reach the locking position and engages behind the obstacle (24) in a form-fitting manner when the locking position is reached,
**characterised in that**
the obstacle (24) has a ramped side (25) which radially displaces the latching hook (23) during the running over.

2. The filter device according to Claim 1,
**characterised in that**
a rotational limit (28) limits the rotation of the lid (4) in the locking direction to the locking position and/or in the unlocking direction to the unlocking position.

3. The filter device according to Claim 2,
**characterised in that**
the rotational limit (28) is integrated into the securing device (22).

4. The filter device according to Claim 3,
**characterised in that**
to form the rotational limit (28), the obstacle (24) of the securing device (22) engages radially into a recess (31) delimited in the circumferential direction, which is displaced in the circumferential direction when the lid (4) is rotated relatively to the obstacle (24).

5. The filter device according to any one of Claims 1 to 4,
**characterised in that**
the latching hook (23) is arranged on the lid (4), wherein it can in particular be provided for the latching hook (23) to be integrally formed on the lid (4).

6. The filter device according to any one of Claims 1 to 5,
**characterised in that**
for rotationally securing the lid (4) in the locking position, an emergency fixing device (32) is provided, which can be activated if the securing device (22) is defective or missing.

7. The filter device according to claim 6,
**characterised in that**
the emergency fixing device (32) has a bracket (33) formed on the housing (2) and a tab (34) formed on the lid (4), which projects radially therefrom and is axially flush with the bracket (33) in the locking position, wherein the emergency fixing device (32) can be activated **in that** a securing element (35) passes axially through the tab (34) and axially penetrates the bracket (33).

8. The filter device according to any one of Claims 1 to 7,
**characterised in that**
the lid (4) may have a connector (36) which projects through a central disc opening (39), which is formed in an axial end disc (37) of the filter element (3), into the interior (14) of the filter element (3).

9. The filter device according to any one of Claims 1 to 8,
**characterised in that**
the filter element (3) is fixed to the lid (4) in such a manner that when the lid (4) is removed, the filter element (3) is pulled out of the accommodation space (5).

10. The filter device according to Claim 9,
**characterised in that**
the lid (4) being fixed to the filter element (3) by pushing the connector (36) into the end disc (37).

11. The filter device according to any one of Claims 1 to 10,
**characterised in that**
the bayonet closure (17) has a plurality of projections (18) which radially protrude on the lid (4) and are arranged in a distributed manner in the circumferential direction and also, in a manner complementary to that, has holding segments (19) which radially protrude on the lid receptacle (15).

12. The filter device according to Claim 11,
**characterised in that**
the lid (4) has a lid edge (20) which protrudes radially outwards and, if the lid (4) is inserted, sits at the end on a collar (21), which protrudes axially from the filter housing (2).

13. The filter device according to Claim 12,
**characterised in that**
the projections (18) are arranged axially spaced from the lid edge (20).

14. The filter device according to Claim 12 or 13,
**characterised in that**
the holding segments (19) are arranged on the end face of the collar (21).

## Revendications

1. Dispositif filtrant, en particulier filtre à air pour une installation d'air frais d'un véhicule automobile et/ou d'un moteur à combustion interne,
- avec un boîtier de filtre (2), qui contient un espace de logement (5),
- avec un élément filtrant (3) de forme annulaire, qui est inséré dans l'espace de logement (5),
- avec un couvercle (4) pour fermer l'espace de logement (5),
- dans lequel le couvercle (4) est fixé de manière amovible au niveau du boîtier de filtre (2) au moyen d'une fermeture à baïonnette (17) de sorte que le couvercle (4) peut être inséré de manière axiale dans un logement de couvercle (15) réalisé au niveau du boîtier de filtre (2) et peut être tourné, dans l'état inséré, entre une position de déverrouillage et une position de verrouillage,
- dans lequel un dispositif de blocage (22) bloque le couvercle (4) tourné dans la position de verrouillage pour l'empêcher de revenir par rotation dans la position de déverrouillage,
- dans lequel le dispositif de blocage (22) présente un crochet d'enclenchement (23) élastique à ressorts dans une direction radiale, lequel s'ajuste dans la direction périphérique par rapport à un obstacle (24) lors de la rotation du couvercle (4) de la position de déverrouillage dans la position de verrouillage, franchit l'obstacle (24) afin d'atteindre la position de verrouillage et vient en prise par l'arrière par complémentarité de forme avec l'obstacle (24) lorsque la position de verrouillage est atteinte,
**caractérisé en ce**
- **que** l'obstacle (24) présente un flanc de rampe (25), qui repousse de manière radiale le crochet d'enclenchement (23) lors du franchissement.

2. Dispositif filtrant selon la revendication 1,
**caractérisé en ce**
**qu'**une limitation de rotation (28) limite la rotation du couvercle (4) dans la direction de verrouillage sur la position de verrouillage et/ou dans la direction de déverrouillage sur la position de déverrouillage.

3. Dispositif filtrant selon la revendication 2,
**caractérisé en ce**
**que** la limitation de rotation (28) est intégrée dans le dispositif de blocage (22).

4. Dispositif filtrant selon la revendication 3,
**caractérisé en ce**
**que** l'obstacle (24) du dispositif de blocage (22) vient en prise de manière radiale avec un évidement (31) délimité dans la direction périphérique afin de former la limitation de rotation (28), lequel évidement s'ajuste dans la direction périphérique par rapport à l'obstacle (24) lors de la rotation du couvercle (4).

5. Dispositif filtrant selon l'une quelconque des revendications 1 à 4,
**caractérisé en ce**
**que** le crochet d'enclenchement (23) est disposé au niveau du couvercle (4), dans lequel il peut être prévu en particulier que le crochet d'enclenchement (23) soit formé intégralement au niveau du couvercle (4).

6. Dispositif filtrant selon l'une quelconque des revendications 1 à 5,
**caractérisé en ce**
**qu'**est prévu un dispositif de fixation de secours (32), qui peut être activé en cas de panne ou d'anomalie ou d'absence du dispositif de blocage (22) afin de bloquer le couvercle (4) dans la position de verrouillage.

7. Dispositif filtrant selon la revendication 6,
**caractérisé en ce**
**que** le dispositif de fixation de secours (32) présente une console (33) réalisée au niveau du boîtier (2) et une bride (34) réalisée au niveau du couvercle (4), faisant saillie de ce dernier de manière radiale, laquelle est alignée de manière axiale avec la console (33) dans la position de verrouillage, dans lequel le dispositif de fixation de secours (32) peut être activé en ce qu'un élément de blocage (35) traverse de manière axiale la bride (34) et pénètre de manière axiale dans la console (33).

8. Dispositif filtrant selon l'une quelconque des revendications 1 à 7,
**caractérisé en ce**
**que** le couvercle (4) présente une tubulure (36), qui dépasse à l'intérieur (14) de l'élément filtrant (3) par une ouverture de disque (39) centrale réalisée par un disque d'extrémité (37) axiale de l'élément filtrant (3).

9. Dispositif filtrant selon l'une quelconque des revendications 1 à 8,
**caractérisé en ce**
**que** l'élément filtrant (3) est fixé au niveau du couvercle (4) de telle manière que l'élément filtrant (3) est sorti hors de l'espace de logement (5) lors du retrait du couvercle (4).

10. Dispositif filtrant selon la revendication 9,
**caractérisé en ce**
**que** le couvercle (4) est fixé au niveau de l'élément filtrant (3) par l'emboîtement de la tubulure (36) dans le disque d'extrémité (37).

11. Dispositif filtrant selon l'une quelconque des revendications 1 à 10,
**caractérisé en ce**
**que** la fermeture à baïonnette (17) présente plusieurs parties faisant saillie (18) dépassant de manière radiale au niveau du couvercle (4), disposés de manière répartie dans la direction périphérique ainsi qu'en complément des segments de maintien (19) dépassant de manière radiale au niveau du logement de couvercle (15).

12. Dispositif filtrant selon la revendication 11,
**caractérisé en ce**
**que** le couvercle (4) présente un bord de couvercle (20) dépassant de manière radiale vers l'extérieur, lequel repose côté frontal, lorsque le couvercle (4) est inséré, sur un collet (21) dépassant de manière axiale du boîtier de filtre (2).

13. Dispositif filtrant selon la revendication 12,
**caractérisé en ce**
**que** les parties faisant saillie (18) sont disposées de manière axialement espacée par rapport au bord de couvercle (20).

14. Elément filtrant selon la revendication 12 ou 13,
**caractérisé en ce**
**que** les segments de maintien (19) sont disposés au niveau de l'extrémité située côté frontal du collet (21).
